# EUROPEAN PATENT SPECIFICATION

(11) **EP 2 205 020 B1**
(45) Date of publication and mention of the grant of the patent: **13.09.2017**
(21) Application number: 08173137.4
(22) Date of filing: 31.12.2008
(51) Int. Cl.: H04W 28/24, H04L 29/06, H04L 29/08

(54) **Capability service in communications system**
Kapazitätsdienst in einem Kommunikationssystem
Service de capacité dans un système de communications

(43) Date of publication of application: 07.07.2010
(73) Proprietor: Telia Company AB, 169 94 Solna (SE)
(72) Inventor: Jalkanen, Tero, 04340, Tuusula (FI)
(74) Representative: Kolster Oy Ab

(56) References cited:
- WO-A-2006/024987
- WO-A-2007/135236
- WO-A-2008/044970
- US-A1- 2007 127 686

## Description

### FIELD OF THE INVENTION

The present invention relates to providing a capability service to a user terminal in a communications system.

### BACKGROUND OF THE INVENTION

The following description of background art may include insights, discoveries, understandings or disclosures, or associations together with disclosures not known to the relevant art prior to the present invention but provided by the invention. Some such contributions of the invention may be specifically pointed out below, whereas other such contributions of the invention will be apparent from their context.

A next-generation multimedia telephony service (MMTel) is a 3GPP (third generation partnership project) solution based on an IP (Internet protocol) multimedia subsystem (IMS). It offers converged, fixed and mobile real-time multimedia communication using media capabilities such as voice, real-time video, text, file transfer and sharing of pictures, audio and video clips. Subscribers using an MMTel service may enjoy real-time communications by making and receiving calls on any communication device with the same phone number, such as a headset with a PC (personal computer) or a mobile device. Users may start with chat, add voice, add another caller, add video, share media and transfer files, and drop any of these without losing or having to end the session. MMtel is a solution for a PSTN replacement form of VoIP. It enables both fixed-line and mobile operators to deploy a single, bearer-independent telephony application that supplant existing circuit telephony and bring an ability to blend speech with video, messaging and other elements.

A problem associated with the above arrangement is that user terminals may not be able to accommodate to a new environment. For example, a two year old SIP voice client may be capable of participating MMTel based communication since it supports the necessary SIP (session initiation protocol) methods and voice codecs, but the problem is that a SIP voice client is unable to indicate the support for them in a way that an MMTel capable client understands.

In an existing procedure designed to ensure backwards compatibility of MMTel, the network routes incoming MMTel related invitation messages (e.g. SIP INVITE messages) towards clients that have indicated a support for MMTel, and also towards those legacy clients that have not indicated any capability. However, this leads to unnecessary SIP INVITE messages and to an increase in network traffic.

In WO 2007/135236 A1, if a service capability of a visited network is higher than the service profile of a user terminal roaming in the visited network, the visited network upgrades the service profile of the user terminal according to the service capability of the visited network. The visited network requests information on the service capability of the user terminal from the home network of the user terminal, wherein, if the service capability of the user terminal is lower than the upgraded service profile, the visited network downgrades the service profile of the user terminal according to the service capability of the user terminal.

In US 2007/0127686 A1 a personal IP multimedia subsystem portal (PIP) application server acquires service capability information on call-originating and group list information on call-terminating terminal. The group list information includes information on additional services usable according to groups generated by the call-terminating terminal, an identifier of the user of the terminal, and multimedia portal contents.

### BRIEF DESCRIPTION OF THE INVENTION

An object of the present invention is thus to provide a method, network element and a user terminal for implementing the method so as to solve above problems. The objects of the invention are achieved by a method and an arrangement which are characterized by what is stated in the independent claims. Further embodiments are disclosed in the dependent claims.

According to the present solution, a capability service is provided to a user terminal in a communications system, such that a feature identifier related to a service capability of the user terminal is provided. On the basis of the feature identifier, it is determined whether or not the user terminal is capable of utilizing a different service level service than indicated by the feature identifier. If the user terminal is capable of utilizing a different service level service than indicated by the feature identifier, the feature identifier is updated in order to indicate the different service level service capability of the user terminal, and information on the updated feature identifier of the user terminal is stored in a core network node.

An advantage of the method and arrangement of the present solution is that the network is able to find out that the user terminal is capable of utilizing a more advanced service than actually indicated by the respective feature identifier. By means of the present solution, the client capability information may be enhanced to include the necessary service related tag(s), and obsolete clients or clients that otherwise are not fully compliant with the latest system specifications, may be able to utilize enhanced terminal capability related functions and features.

### BRIEF DESCRIPTION OF THE DRAWINGS

In the following the invention will be described in greater detail by means of exemplary embodiments with reference to the accompanying drawings, in which
Figure 1 shows a simplified block diagram illustrating an exemplary system architecture;
Figure 2 shows a messaging diagram illustrating an exemplary messaging event according to an embodiment of the invention;
Figure 3 shows a flow chart illustrating the operation of a core network element according to an exemplary embodiment of the invention;
Figure 4 shows a flow chart illustrating the operation of a terminal device according to an exemplary embodiment of the invention.

### DETAILED DESCRIPTION OF THE INVENTION

Exemplary embodiments of the present solution will now be described more fully hereinafter with reference to the accompanying drawings, in which some, but not all embodiments of the solution are shown. Indeed, the solution may be embodied in many different forms and should not be construed as limited to the embodiments set forth herein; rather, these embodiments are provided so that this disclosure will satisfy applicable legal requirements. Although the specification may refer to "an", "one", or "some" embod i-ment(s) in several locations, this does not necessarily mean that each such reference is to the same embodiment(s), or that the feature only applies to a single embodiment. Single features of different embodiments may also be combined to provide other embodiments. Like reference numerals refer to like elements throughout.

The present solution is applicable to any user terminal, server, corresponding component, and/or to any communication system or any combination of different communication systems that support an IP multimedia subsystem (IMS), and/or any other SIP/IP core environment. The communication system may be a fixed communication system or a wireless communication system or a communication system utilizing both fixed networks and wireless networks. The protocols used, the specifications of communication systems, servers and user terminals, especially in wireless communication, develop rapidly. Such development may require extra changes to an embodiment. Therefore, all words and expressions should be interpreted broadly and they are intended to illustrate, not to restrict, the embodiment.

In the following, different embodiments will be described using as an example of a system architecture whereto the embodiments may be applied, an architecture based on an evolved UMTS terrestrial radio access network of an enhanced cellular network (E-UTRAN). Although E-UTRAN is discussed as a primary example herein, the present solution is not limited to E-UTRAN, LTE, and/or 3GPP systems. Thus, the present solution may also be applicable to other communications systems such as WiMAX (worldwide interoperability for microwave access), HSDPA (high-speed downlink packet access), HSUPA (high-speed uplink packet access), and/or WLAN (wireless local area network).

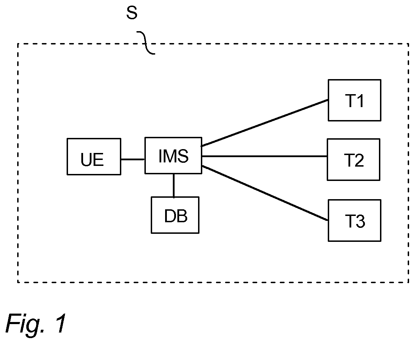

A general architecture of a communication system providing is illustrated in Figure 1. Figure 1 is a simplified system architecture only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements and the protocols used in or for group communication, are irrelevant to the actual invention. Therefore, they need not to be discussed in more detail here.

Figure 1 provides an example of an environment where the present solution may be used. Referring to Figure 1, a communications system S comprises a user equipment UE, T1, T2, T3 that may be e.g. a mobile or wireless user terminal, such as a mobile phone (mobile station), a personal digital assistant (PDA), a game console, a smart phone, a personal computer (PC), a laptop, a desktop computer or the like, capable of processing SIP (session initiation protocol) data. The system S further comprises a core network element IMS, such as an Internet protocol multimedia subsystem IMS or any other SIP/IP core network element. The IP multimedia subsystem comprises or is operatively connected to a database DB. In the example shown in Figure 1, the user terminals T1, T2 and T3 belong to a first user, and the user terminal UE belongs to a second user. In Figure 1, the user terminal T1 may comprise e.g. a high-end PC client, the user terminal T2 may comprise e.g. a low-end mobile phone, and the user terminal T3 may comprise e.g. a legacy PSTN desk phone.

Figure 1 shows a simplified version of an evolved UMTS (universal mobile telecommunications system) terrestrial radio access network structure, which only illustrates the components that are essential to illustrate the present solution, even though those skilled in the art naturally know that a general communications system also comprises other functions and structures, which do not have to be described in more detail herein. The network element IMS may include any network element operated by a network operator in a cellular, wireless and/or fixed network, such as a mobile switching centre, SGSN, GGSN, VLR, HLR, HSS, base station, access point, radio network controller, database, and/or a network computer or server. Although each network element IMS, DB, T1, T2, T3, UE has been depicted as one entity, different modules and memory may be implemented in one or more physical or logical entities. A general architecture of a communication system providing session-based communication is illustrated in Figure 1. Figure 1 is a simplified system architecture only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements and the protocols used in or for session-based communication are irrelevant to the actual invention. Therefore, they need not be discussed in more detail here.

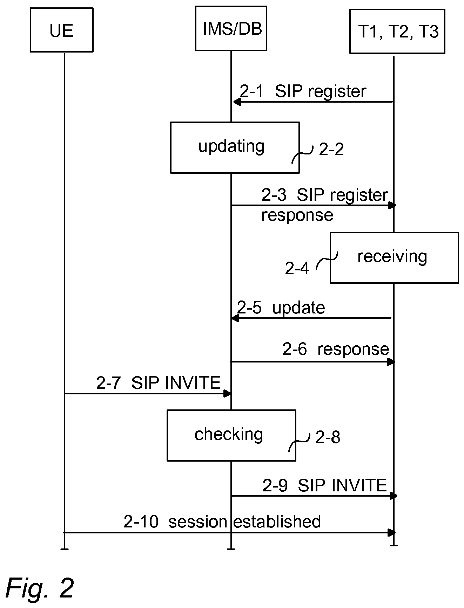

Figure 2 illustrates signalling between network elements according to an exemplary embodiment of the present solution. Referring to Figure 2, a user terminal registers to a service and/or to a core network element by transmitting a SIP_register message 2-1 to the core network element (which may be e.g. a core network subsystem node such as an IP multimedia subsystem IMS). The SIP_register message includes information on one or more feature identifiers (such as a feature tag and/or related SIP message headers such as user agent) related to a service capability of a user terminal T1, T2, T3 of a first user. In step 2-2, the SIP_register message is received in IMS, and the user terminal is registered to IMS. Further, in step 2-2, IMS checks the feature identifier, and determines, on the basis of the one or more feature identifiers, whether or not the user terminal T1, T2, T3 is capable of utilizing a more advanced service than actually indicated by the feature identifier. Without additional knowledge, the network may not automatically be able to know all the real capabilities of all of the possible clients. If the user agent SIP header itself does not contain enough information, then some kind of end-user input etc. may be needed in order the network to understand what it needs to do. It should be noted that this merely relates to the "network assisted terminal capability enhancement" feature of the present solution; for example, an end-user may still set preferences in the database even if the capabilities themselves are not known. If it is determined that the user terminal T1, T2, T3 is capable of utilizing a more advanced service than indicated by the feature identifier, IMS updates 2-2 the feature identifier thus indicating the more advanced service capability of the user terminal T1, T2, T3. The updated feature identifier may be stored 2-2, at least temporarily, in a database element DB. (In a response message 2-3, IMS may be arranged to transmit to the user terminal an acknowledgement of the SIP registration as well as a notification of the updating of the feature identifier (a respective notification may be displayed to the user)).

In an embodiment of the present solution, the user terminal T1, T2, T3 may comprise means for indicating 2-4, to the user of the user terminal T1, T2, T3, if s/he has an updated communication client in the user terminal T1, T2, T3 with a new feature. In the embodiment, the user terminal T1, T2, T3 is able to notify 2-4 (e.g. to display a respective notification) the user that the respective feature tag of the new feature has not been added by the client, and thus the user terminal T1, T2, T3 cannot be reached by utilizing the new feature. Therefore, the system may comprise a mechanism (e.g. a suitable web page provided by the IMS operator) by means of which the end-user may transmit (e.g. via IMS) a request 2-5 to and receive (e.g. via IMS) information 2-6 from the database DB for updating the feature tag.

In the present solution, an initiation message such as a SIP INVITE message 2-7 may be transmitted from a user terminal UE of a second user to IMS, wherein the message 2-7 indicates that the second user wishes to start a communication session (e.g a communication via instant messaging) with the first user (i.e. the user of T1, T2, T3). In response to receiving the message 2-7, IMS checks 2-8 the database DB in order to find out whether a respective feature identifier stored in DB indicates that T1, T2 and/or T3 supports service capabilities (e.g. a correct instant messaging (IM) mode) required by the communication that UE wishes to start. If the feature identifier indicates that T1, T2 and/or T3 supports the required service capabilities, IMS forwards the SIP INVITE message 2-9 to T1, T2 and/or T3 respectively. If the user terminal T1, T2, T3 accepts the invitation, a communication session is established between UE and T1, T2 and/or T3 in a message 2-10 via IMS.

It should be noted that the updating in steps 2-2 (network-assisted) and/or 2-4 (user-assisted) may be performed only if needed, and the system may be arranged perform both of the updating steps 2-2, 2-4 and/or only one of them.

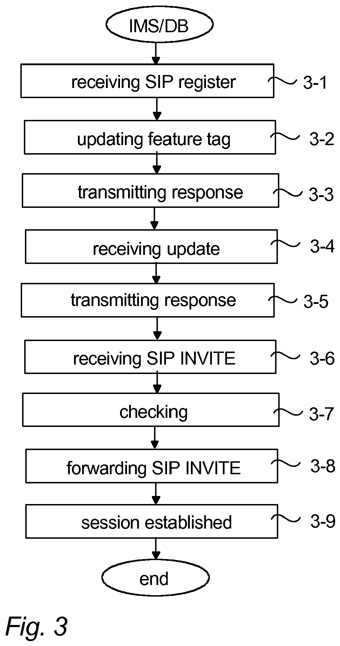

Figure 3 illustrates the operation of a core network element according to an exemplary embodiment of the present solution. Referring to Figure 3, the core network element (which may be e.g. a core network subsystem node such as an IP multimedia subsystem IMS, S-CSCF (serving call state control function) or any other SIP server) receives 3-1 a SIP_register message from a user terminal T1, T2, T3 that wishes to register to a service and/or to the core network element IMS/DB. The SIP_register message includes information on one or more feature identifiers (such as a feature tag and/or related SIP message headers such as user agent) related to a service capability of the user terminal T1, T2, T3 belonging to a first user. Thus, in step 3-1, the user terminal is registered to IMS, and, in step 3-2, IMS checks the feature identifier and determines, on the basis of the feature identifier, whether or not the user terminal T1, T2, T3 is capable of utilizing a more advanced service than actually indicated by the feature identifier. If it is determined by that the user terminal T1, T2, T3 is capable of utilizing a more advanced service than indicated by the feature identifier, IMS updates 3-2 the feature identifier in order to indicate the more advanced service capability of the user terminal T1, T2, T3. The updated feature identifier may be stored 3-2, at least temporarily, in a database element DB. (In a response message, IMS may be arranged to transmit 3-3 to the user terminal an acknowledgement of the SIP registration as well as a notification of the updating of the feature identifier (a respective notification may be displayed to the user)).

In an embodiment of the present solution, the system may comprise a mechanism (e.g. a suitable web page provided by the IMS operator) by means of which IMS/DB may receive 3-4 a request from and transmit 3-5 information to the user terminal T1, T2, T3 so that the user terminal may update the feature tag.

In the present solution, an initiation message such as a SIP INVITE message may be received 3-5 from a user terminal UE of a second user, wherein the SIP INVITE message indicates that the second user wishes to start a communication session (e.g a communication via instant messaging) with the first user (i.e. the user of T1, T2, T3). In response to receiving the SIP INVITE message, IMS checks 3-7 the database DB in order to find out whether a respective feature identifier indicates that T1, T2 and/or T3 supports the service capabilities (e.g. a correct instant messaging (IM) mode) required by the communication session. If the feature identifier indicates that T1, T2 and/or T3 supports the required service capabilities, IMS forwards 3-8 the SIP INVITE message to T1, T2 and/or T3 respectively. If the invitation is accepted by the user terminal T1, T2, T3, a communication session is established 3-9 between UE and T1, T2 and/or T3.

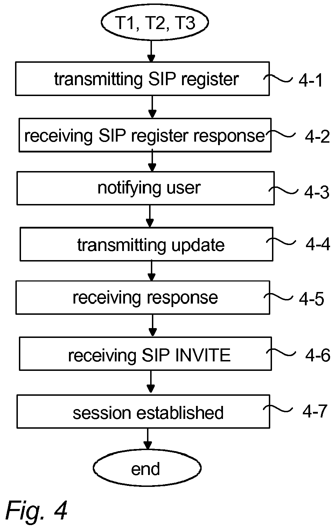

Figure 4 illustrates the operation of a user terminal T1, T2, T3 according to an exemplary embodiment of the present solution. Referring to Figure 4, the user terminal registers to a service and/or to a core network element by transmitting 4-1 a SIP_register message to the core network element (which may be e.g. a core network subsystem node such as an IP multimedia subsystem IMS). The SIP_register message includes information on one or more feature identifiers (such as a feature tag and/or related SIP message headers such as user agent) related to a service capability of a user terminal T1, T2, T3 belonging to a first user. (In a response message 4-2, the user terminal may be arranged to receive from IMS an acknowledgement message of the SIP registration as well as a notification of an eventual updating of the feature identifier (a respective notification may be displayed to the user)).

In an embodiment of the present solution, the user terminal T1, T2, T3 may comprise means for indicating 4-3, to the user of the user terminal T1, T2, T3, if s/he has an updated communication client in the user terminal T1, T2, T3 with a new feature. In the embodiment, the user terminal T1, T2, T3 is able to notify 4-3 (i.e. to display a respective notification) the user that the respective feature tag has not been added by the client, and thus the user terminal T1, T2, T3 cannot be reached with the new feature. Therefore, the system may comprise a mechanism (e.g. a suitable web page provided by the IMS operator) by means of which the end-user may transmit 4-4 a request to and receive 4-5 information from a database DB for updating the feature tag.

In the present solution, if a feature identifier indicates that T1, T2 and/or T3 supports required service capabilities (e.g. a correct instant messaging (IM) mode), a respective initiation message such as a SIP INVITE message may be received 4-6 from IMS. The SIP INVITE message may be received from a user terminal UE of a second user via IMS, the message indicating that the second user wishes to start a communication session (e.g a communication via instant messaging) with the first user (i.e. the user of T1, T2, T3). If the user terminal T1, T2, T3 accepts the invitation, a communication session is established 4-7 between UE and T1, T2 and/or T3 via IMS.

It should be noted that the updating in steps 4-4, 4-5 ("user-assisted enhancement") is not mandated by the present solution, and it may be performed only if needed.

The present solution enables fixing intelligence missing at the terminal side by adding intelligence in the network side. The present solution may further allow the end-user to contribute in the logic how the network routes incoming connections.

By means of the present solution, the network is able to understand that a legacy user terminal is able to support a service, although not indicated by the information originally stored in the network. Thus the network is able to "enhance" (e.g. add and/or upgrade) client capability information (e.g. SIP voice client capability information) to include necessary service related (e.g. MMTel related) tag(s).

The present solution relates to mobile and/or fixed broadband multimedia communication clients in an IMS (or some other SIP/IP core) environment. The purpose of the present solution is to provide a mechanism that enables obsolete clients, or clients that otherwise are not 100% compliant with the latest IMS specifications, to be a part of terminal capability-related functions and features of IMS.

In an exemplary embodiment, a feature tag header of a SIP message (e.g. a SIP_register message) may be used as a mechanism to indicate a support for certain service/application. For example, a feature tag urn:urn-xxx:3gpp-service:ims.icsi.mmtel may be used indicating the support for MMTel packet switched voice service.

In prior art systems, there is no specified network-based database for storing terminal capability information, nor a mechanism for the network to modify, enhance and/or fix the terminals to inform the network and other clients about their capabilities. In prior art systems, there is no 100% reliable way for operators to know what capabilities the other terminal has either. Prior art systems do not provide the end-users with a possibility to set their own preferences, especially not globally for all communication methods. In prior art systems, end-users may not be able to upgrade the user agent-related information, or they may be able to do that only in a specific terminal implementation.

The present solution provides means for filling the holes of completely/partly missing client user agent information by the network and/or by the end-user. Thus, in practice, by using the present solution, an obsolete terminal may become capable of sharing its communication capabilities with the other clients and/or network nodes, even if the terminal itself is actually unable to do this.

In an exemplary embodiment, the network side may enhance the client capabilities via database DB according to one or more of the following scenarios:
1) Enhancing an "almost supporting" client capabilities to "fully supporting" (e.g. in the case of a SIP voice client supporting MMTel).
2) Minimizing mandatory legacy support traffic towards clients that are not actually legacy clients as such.
3) Fixing the potential feature tag mismatch/misspelling on behalf of the client.
4) Allowing the end-user to set preferences.
5) Allowing the end-user to modify client capabilities (manual mode of the feature nr 1).

The present solution may require a specific database in the network, containing information regarding different clients and their "real" (i.e. network enhanced) capabilities, and an IP multimedia subsystem IMS having a capability of doing a "dip" into this database DB in response to a client registering to IMS. IMS also performs a database DB "dip" in order to fetch user preferences etc., in response to receiving a SIP INVITE connection initiation directed to a client. However, in an implementation option, the database DB may e.g. be a part of an existing 3GPP IMS HSS (home subscriber server).

The user him/herself may be able to indicate the level of capabilities the terminal has if the network is unable to resolve it e.g. from a user agent SIP header. For example, when the user upgrades the software of the PC client, it may have new features such as an MMTel support. However, the client in the terminal may not have its SIP_register user agent or feature tag information updated. Thus the network may not know about the new MMTel enhancement. The system may comprise means for allowing the user to update the database DB in the network, so that the network is then able to automatically add MMTel feature tag for that particular client.

Another example of an end-user input to the database DB includes setting of communication preferences. For example, the user may be able to set such a preference that in response to his/her PC client being registered to IMS, messaging are directed to the PC client, while voice/video calls are directed to his/her mobile client. One option is that the network automatically modifies the PC client SIP_register message by removing voice/call related aspects from it.

In an exemplary situation, a first user may have three different communication terminals/clients: 1) a high-end PC client T1, 2) a low-end mobile phone T2, and 3) a legacy PSTN desk phone (T3), where T1 has multiple enhanced capabilities, T2 has basic voice and messaging capabilities, and T3 has a basic voice capability. An exemplary use case may thus be as follows:
1) T2 registers itself into the IMS core system by using a normal SIP_register method.
2) IMS notices that T2 is using a malformed IM pager mode feature tag, and, according to the present solution, fixes it automatically.
3) The first user notes s/he has an updated rich communication client in T2 with a new IM large message feature. However, when reading the release notes of this update, s/he notices that the client program in T2 has not added the respective IM large message feature tag, thus the client is unable to be reached with large messages. Therefore the first user decides to utilize an end-user database DB update mechanism (the mechanism may include e.g. an operator-offered web page, and manually add the IM large message feature tag for T2.
4) IMS receives an incoming IM pager mode session invitation from a second user UE to the first user.
5) IMS checks the incoming session, and notices that T2 has now the correct IM pager mode capabilities (i.e. capabilities required by the incoming session) based on the network "enhancing" this feature tag in point "2)").
6) IMS forwards the IM pager mode session invitation to T2 (Without the "network enhancement", an error would have been sent to the second user, and an IM session would not have been set up).
7) T2 accepts the IM pager mode invitation and the IM pager mode session is started between the second user and the first user. After a couple of pager mode messages (e.g. simple text messages), the second user UE decides to send a big image file to the first user T2. This may be handled with an IM large message mechanism, in which a related an invitation message is sent towards T2. While checking the invitation, IMS notices that T2 is capable of receiving it (since, in point "3)", the first user updated the information) and forwards the invitation. An IM large message session is set up between the second user and the first user. This session would not be set up without the end-user input to database DB.

In a further exemplary situation, an exemplary use case may be as follows:
1) IMS receives an incoming video call session from the second user UE to the first user, wherein the first user happens to have T2 and T3 registered to IMS.
2) IMS checks the incoming video call session, and notices that T1 has non-matching capabilities and T3 has not indicated anything; thus IMS considers T3 as a legacy phone. Therefore, none of the second user clients seems to be capable of receiving the incoming session, but based on IETF rules, a legacy terminal (in this case T3) is to be tried anyway.
3) A video call invitation is sent from IMS to T3, and T3 sends an error back to the network.
4) The network forwards the error to the user terminal of the second user.

In a yet further exemplary situation, an unnecessary legacy phone invitation may be avoided:
1) An incoming video call session from the second user UE to the first user. The first user happens to have T2 and T3 registered to IMS.
2) IMS checks the incoming video call session, and notices that T1 has non-matching capabilities, and that due to the network "enhancing" T3 capabilities, T3 has the non-matching capabilities informed in IMS/DB. Thus, none of the clients is capable and no legacy clients are found either.
3) An error message is sent to the second user UE.

In a yet further exemplary situation, a VoIP client may be fixed to support MMTel:
1) IMS receives an incoming MMTel PS voice call session from the second user to the first user. The first user happens to have T1 registered to IMS. T1 is "only" an IETF-SIP-compliant VoIP client, not a "full" 3GPP SIP compliant MMTel client. T1 still supports the same voice codecs and SIP methods as an MMTel client.
2) IMS checks the incoming video call session, and notices that T1 has now "MMTel capabilities" based on the network "enhancing" the T1 capabilities (performed automatically when T1 performs a SIP registration to the IMS core), and routes an MMTel invitation to T1. (Without the "network enhancement", an error would have been to the second user UE, and a voice session would not have been set up).
3) T1 accepts the MMTel invitation and a PS voice session is started between the second user and the first user.

In a yet further exemplary situation, a misconfigured feature tag may be fixed:
1) IMS receives an incoming IM session from the first user to the second user. The second user happens to have T1 registered to IMS. T1 has full IM capabilities, but unfortunately T1 has a misconfigured/misspelled feature tag.
2) IMS checks the incoming video call session, notices that T1 has now "MMTel capabilities" based on the network "enhancing" the T1 capabilities, and routes an MMTel invitation to T1. (Without the "network enhancement", an error would have been to the second user, and a voice session would have not been set up).
3) T1 accepts the MMTel invitation, and a PS voice session is started between the second user and the first user.

An advantage of the present solution is that it does not necessarily require standardization support since it may be built as a transparent addition to IMS or any existing SIP server. Also from the client's point of view, the present solution may be transparent, i.e. no specific support is needed as such.

The present solution is applicable to any kind of SIP-based platform and/or server, not just IMS, even though IMS is used as an example herein.

According to an embodiment of the present solution, the user terminal has a compatible upgradeable capability information exchange mechanism, and IMS is configured to offer the user terminal with a preference setting functionality.

According to an embodiment, the present solution is applied in a rich communication suite (RCS) environment.

The present solution enables the network and/or the end-user to make a correction if there is completely/partly missing client user agent information. By means of the present solution, an obsolete terminal is capable of sharing its communication capabilities with other clients and network nodes, even if the terminal itself were originally unable to do this.

The present solution enables correcting incorrect user terminal capability information, and thus unnecessary SIP INVITE messages and/or increase of network traffic may be avoided.

An advantage of the present solution is that it enables enhancing "almost supporting" client capabilities to "fully supporting" (e.g. in case of a SIP voice client supporting MMTel), minimizing mandatory legacy support traffic towards clients that are not actually legacy clients as such, fixing a potential feature tag mismatch/misspelling on behalf of client, allowing an end-user to set preferences, and/or allowing end-user to modify client capabilities (a manual mode of the feature of enhancing "almost supporting" client capabilities to "fully supporting").The steps/points, signaling messages and related functions described above in Figures 1 to 4 are in no absolute chronological order, and some of the steps/points may be performed simultaneously or in an order differing from the given one. Other functions can also be executed between the steps/points or within the steps/points and other signaling messages sent between the illustrated messages. Some of the steps/points or part of the steps/points can also be left out or replaced by a corresponding step/point or part of the step/point. The operations to be executed illustrate a procedure that may be implemented in one or more physical or logical entities. The signaling messages are only exemplary and may even comprise several separate messages for transmitting the same information. In addition, the messages may also contain other information.

The techniques described herein may be implemented by various means so that an apparatus implementing one or more functions of a corresponding mobile entity described with an embodiment comprises not only prior art means, but also means for implementing the one or more functions of a corresponding apparatus described with an embodiment and it may comprise separate means for each separate function, or means may be configured to perform two or more functions. For example, these techniques may be implemented in hardware (one or more apparatuses), firmware (one or more apparatuses), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer or external to the processor/computer, in which case it can be communicatively coupled to the processor/computer via various means as is known in the art.

User terminal (user equipment) may refer to any user communication device. A term "user equipment" as used herein may refer to any device having a communication capability, such as a wireless mobile terminal, a PDA, a smart phone, a personal computer (PC), a laptop computer, a desktop computer, etc. For example, the wireless communication terminal may be an UMTS or GSM/EDGE smart mobile terminal. Thus, the application capabilities of the device according to various embodiments of the invention may include native applications available in the terminal, or subsequently installed applications. The core network node may be implemented in any network element, such as a server.

An apparatus capable of performing operation according to various embodiments of the present solution may refer to any communication entity, such as the core network node, database or the user terminal. The apparatus may generally include a processor, controller, or the like connected to or comprising a memory. The memory may include volatile and/or non-volatile memory and typically stores content, data, or the like. For example, the memory may store computer program code such as software applications or operating systems, information, data, content, or the like for a processor to perform steps associated with operation of the entity in accordance with embodiments of the present invention. Also, for example, the memory typically stores content transmitted from, or received by, the apparatus. Memory may be, for example, random access memory (RAM), a hard drive, or other fixed data memory or storage device. The processor may receive input from an input device and may display information on a display. The processor may also be connected to at least one communication interface or other means for transmitting and/or receiving data, content, messages, or the like. Where the apparatus provides wireless communication, such as in a UMTS, GSM, EDGE, WCDMA network, Bluetooth network, a wireless LAN network, or other mobile network, the processor may operate with a wireless communication subsystem of the interface. Where the apparatus provides an IP server with IP communication, the processor may operate with an IP communication system of the interface. One or more processors, memory, storage devices, and other computer elements may be used in common by a computer system and subsystems, as part of the same platform, or processors may be distributed between a computer system and subsystems, as parts of multiple platforms. If the apparatus is, for example, a mobile station or a network server, the apparatus may also include modules such as a messaging service client/server and/or an application associated with the processor. These modules may be software and/or software-hardware components. For example, a messaging service client/server may include software capable of establishing, modifying, and terminating messaging sessions, to send and receive messages, etc. The apparatus may generally include a processor, controller, control unit or the like connected to a memory and to various interfaces of the apparatus. Generally the processor is a central processing unit, but the processor may be an additional operation processor. The processor may comprise a computer processor, application-specific integrated circuit (ASIC), field-programmable gate array (FPGA), and/or other hardware components that have been programmed in such a way to carry out one or more functions of an embodiment. An interface provides a transmitter and/or a receiver or a corresponding means for receiving and/or transmitting data, content, messages including the above described advertisements, responses and solicitation messages.

At least some embodiments or aspects described herein may be implemented using programming stored within an appropriate storage circuitry described above or communicated via a network or other transmission media and configured to control appropriate processing circuitry. For example, programming may be provided via appropriate media including, for example, embodied within articles of manufacture, embodied within a data signal (e.g., modulated carrier wave, data packets, digital representations, etc.) communicated via an appropriate transmission medium, such as a communication network (e.g., the Internet or a private network), wired electrical connection, optical connection or electromagnetic energy, for example, via communications interface, or provided using other appropriate communication structure or medium. Exemplary programming including processor-usable code may be communicated as a data signal embodied in a carrier wave in but one example.

It will be obvious to a person skilled in the art that, as technology advances, the inventive concept may be implemented in various ways. The invention and its embodiments are not limited to the examples described above but may vary within the scope of the claims.

## Claims

1. A method of providing a capability service to a user terminal (T1, T2, T3) in a communications system (S), the method comprising providing a feature identifier related to a service capability of the user terminal (T1, T2, T3),
**characterized by** the method comprising
determining, on the basis of the feature identifier, whether or not a first user terminal (T1, T2, T3) is capable of utilizing a more advanced service level service than indicated by the feature identifier;
wherein if the first user terminal (T1, T2, T3) is capable of utilizing a more advanced service level service than indicated by the feature identifier, the method comprises
providing an updated feature identifier in order to indicate the more advanced service level service capability of the first user terminal (T1, T2, T3); and
storing, in a core network node (IMS, DB), information on the updated feature identifier of the first user terminal.

2. A method according to claim 1, **characterized in that** the determination is carried out in response to the user terminal registering to a network node and/or in response to the user terminal registering to a service.

3. A method according to claim 1 or 2, **characterized in that** it is checked whether a further user terminal belonging to the user of the first user terminal, is capable of using the more advanced service level service,
wherein if the further user terminal is capable of utilizing the more advanced service level service, the method comprises
updating a feature identifier related to a service capability of the further user terminal in order to indicate the more advanced service level service capability of the further user terminal, and
storing, in the core network node (IMS, DB), information on the updated feature identifier of the further user terminal.

4. A method according to claim 1, 2 or 3, **characterized in that** the feature identifier includes a feature tag, user agent, and/or a related SIP message header.

5. A method according to any of claims 1 to 4, **characterized by**
receiving, from a second user terminal, an invitation message related to a communications service, wherein the message is directed to the first user terminal,
comparing the service capabilities required by the communications service with information stored in core network node and relating to the service capability of the first user terminal,
wherein the invitation message is forwarded to the first user terminal, if the information indicates that the first user terminal is capable of utilizing the communications service.

6. A method according to any of claims 1 to 5, **characterized by** the first user terminal providing, to a core network node, information on an updated feature identifier of the first user terminal.

7. A communications system (S), wherein the system (S) is configured to provide a feature identifier related to a service capability of a user terminal (T1, T2, T3),
**characterized in that** the system (S) is configured to
determine, on the basis of the feature identifier, whether or not the user terminal (T1, T2, T3) is capable of utilizing a more advanced service level service than indicated by the feature identifier;
wherein if the user terminal (T1, T2, T3) is capable of utilizing a more advanced service level service than indicated by the feature identifier, the system (S) is configured to
provide updated feature identifier in order to indicate the more advanced service level service capability of the user terminal (T1, T2, T3); and
store, in a core network node (IMS, DB), information on the updated feature identifier of the user terminal.

8. A core network node (IMS, DB) of a communications system (S) wherein the core network node (IMS, DB) is configured to provide a feature identifier related to a service capability of a user terminal (T1, T2, T3),
**characterized in that** the core network node (IMS, DB) is configured to
determine, on the basis of the feature identifier, whether or not the user terminal (T1, T2, T3) is capable of utilizing a more advanced service level service than indicated by the feature identifier;
wherein if the user terminal (T1, T2, T3) is capable of utilizing a more advanced service level service than indicated by the feature identifier, the core network node (IMS, DB) is configured to
provide an updated feature identifier in order to indicate the more advanced service level service capability of the user terminal (T1, T2, T3); and
store information on the updated feature identifier of the user terminal (T1, T2, T3).

9. A network node according to claim 8, **characterized in that** is configured to carry out the determination in response to the user terminal registering to the network node and/or in response to the user terminal registering to a service.

10. A network node according to claim 8 or 9, **characterized in that** is configured to check whether a further user terminal belonging to the user of a first user terminal, is capable of using the more advanced service level service,
wherein if the further user terminal is capable of utilizing the more advanced service level service, the network node is configured to
update a feature identifier related to a service capability of the further user terminal in order to indicate the more advanced service level service capability of the further user terminal, and
store the updated feature identifier of the further user terminal.

11. A network node according to claim 8, 9 or 10, **characterized in that** is configured to
receive, from a second user terminal, an invitation message related to a communications service, wherein the message is directed to the first user terminal,
compare the service capabilities required by the communications service with information stored in core network node and relating to the service capability of the first user terminal, and
forward the invitation message to the first user terminal, if the information indicates that the first user terminal is capable of utilizing the communications service.

12. A network node according to any of claims 8 to 11, **characterized in that** is configured to receive, from the first user terminal, information on an updated feature identifier of the first user terminal.

13. A user terminal (T1, T2, T3) for a communications system (S), wherein the user terminal (T1, T2, T3) is capable of providing a feature identifier related to a service capability of the user terminal (T1, T2, T3),
**characterized in that** the user terminal (T1, T2, T3) is configured to
determine, on the basis of the feature identifier, whether or not the user terminal (T1, T2, T3) is capable of utilizing a more advanced service level service than indicated by the feature identifier;
wherein if the user terminal (T1, T2, T3) is capable of utilizing a more advanced service level service than indicated by the feature identifier, the user terminal (T1, T2, T3) is configured to
provide an updated feature identifier in order to indicate the more advanced service level service capability of the user terminal (T1, T2, T3).

14. A user terminal according to claim 13, **characterized in that** it is configured to retrieve, from a core network node, information on the feature identifier of the user terminal, stored in the core network node.

15. A user terminal according to claim 13 or 14, **characterized in that** it is configured to transmit, to a core network node, information on the updated feature identifier of the user terminal.

## Patentansprüche

1. Verfahren zum Bereitstellen eines Kapazitätsdienstes für ein Benutzerendgerät (T1, T2, T3) in einem Kommunikationssystem (S), wobei das Verfahren das Bereitstellen eines Merkmalsidentifikators umfasst, der sich auf eine Dienstkapazität des Benutzerendgeräts (T1, T2, T3) bezieht,
**dadurch gekennzeichnet, dass** das Verfahren umfasst
Bestimmen, basierend auf den Merkmalsidentifikator, ob ein erstes Benutzerendgerät (T1, T2, T3) in der Lage ist oder nicht, einen fortgeschritteneren Dienstleveldienst zu verwenden, als durch den Merkmalsidentifikator angezeigt wird;
wobei, wenn das erste Benutzerendgerät (T1, T2, T3) in der Lage ist, einen fortgeschritteneren Dienstleveldienst zu verwenden, als durch den Merkmalsidentifikator angezeigt wird, das Verfahren umfasst
Bereitstellen eines aktualisierten Merkmalsidentifikators, um die fortgeschrittenere Dienstleveldienstkapazität des ersten Benutzerendgeräts (T1, T2, T3) anzuzeigen; und
Speichern, in einem Kernnetzknoten (IMS, DB), von Information über den aktualisierten Merkmalsidentifikator des ersten Benutzerendgeräts.

2. Verfahren nach Anspruch 1, **dadurch gekennzeichnet, dass** das Bestimmung in Antwort darauf, dass sich das Benutzerendgerät an einem Netzknoten registriert, und/oder in Antwort darauf, dass sich das Benutzerendgerät bei einem Dienst registriert, ausgeführt wird.

3. Verfahren nach Anspruch 1 oder 2, **dadurch gekennzeichnet, dass** geprüft wird, ob ein weiteres Benutzerendgerät, das zu dem Benutzer des ersten Benutzerendgeräts gehört, in der Lage ist, den fortgeschritteneren Dienstleveldienst zu nutzen,
wobei, wenn das weitere Benutzerendgerät in der Lage ist, den fortgeschritteneren Dienstleveldienst zu verwenden, das Verfahren umfasst Aktualisieren eines Merkmalsidentifikators, der sich auf eine Dienstkapazität des weiteren Benutzerendgeräts bezieht, um die fortgeschrittenere Dienstleveldienstkapazität des weiteren Benutzerendgeräts anzuzeigen, und Speichern, in dem Kernnetzknoten (IMS, DB), von Informationen über den aktualisierten Merkmalsidentifikator des weiteren Benutzerendgeräts.

4. Verfahren nach Anspruch 1, 2 oder 3, **dadurch gekennzeichnet, dass** der Merkmalsidentifikator ein Merkmalstag, einen Benutzeragenten, und/oder einen zugehörigen SIP-Nachrichtenkopf aufweist.

5. Verfahren nach einem der Ansprüche 1 bis 4, **gekennzeichnet durch**
Empfangen, von einem zweiten Benutzerendgerät, einer Einladungsnachricht, die sich auf einen Kommunikationsdienst bezieht, wobei die Nachricht an das erste Benutzerendgerät gerichtet ist,
Vergleichen der von dem Kommunikationsdienst benötigten Dienstkapazitäten mit Informationen, die in dem Kernnetzknoten gespeichert sind und sich auf die Dienstkapazität des ersten Benutzerendgeräts beziehen,
wobei die Einladungsnachricht an das erste Benutzerendgerät weitergeleitet wird, wenn die Informationen anzeigen, dass das erste Benutzerendgerät in der Lage ist, den Kommunikationsdienst zu verwenden.

6. Verfahren nach einem der Ansprüche 1 bis 5, **gekennzeichnet dadurch, dass** das erste Benutzerendgerät Informationen über einen aktualisierten Merkmalsidentifikator des ersten Benutzerendgeräts an einen Kernnetzknoten zur Verfügung stellt.

7. Kommunikationssystem (S), wobei das System (S) so konfiguriert ist, dass es einen Merkmalsidentifikator bereitstellt, der sich auf eine Dienstkapazität eines Benutzerendgeräts bezieht (T1, T2, T3),
**dadurch gekennzeichnet, dass** das System (S) konfiguriert ist zum
Bestimmen, basierend auf den Merkmalsidentifikator, ob das Benutzerendgerät (T1, T2, T3) in der Lage ist oder nicht, einen fortgeschritteneren Dienstleveldienst zu verwenden, als durch den Merkmalsidentifikator angezeigt wird;
wobei, wenn das Benutzerendgerät (T1, T2, T3) in der Lage ist, einen fortgeschritteneren Dienstleveldienst zu verwenden, als durch den Merkmalsidentifikator angezeigt wird, das System (S) konfiguriert ist zum
Bereitstellen eines aktualisierten Merkmalsidentifikators, um die fortgeschrittenere Dienstleveldienstkapazität des Benutzerendgeräts (T1, T2, T3) anzuzeigen; und
Speichern, in einem Kernnetzknoten (IMS, DB), von Informationen über den aktualisierten Merkmalsidentifikator des Benutzerendgeräts.

8. Kernnetzknoten (IMS, DB) eines Kommunikationssystems (S), wobei der Kernnetzknoten (IMS, DB) so konfiguriert ist, dass er einen Merkmalsidentifikator bereitstellt, der sich auf eine Dienstkapazität eines Benutzerendgeräts (T1, T2, T3) bezieht,
**dadurch gekennzeichnet, dass** der Kernnetzknoten (IMS, DB) konfiguriert ist zum Bestimmen, basierend auf den Merkmalsidentifikator, ob das Benutzerendgerät (T1, T2, T3) in der Lage ist oder nicht, einen fortgeschritteneren Dienstleveldienst zu verwenden, als durch den Merkmalsidentifikator angezeigt wird;
wobei, wenn das Benutzerendgerät (T1, T2, T3) in der Lage ist, einen fortgeschritteneren Dienstleveldienst zu verwenden, als durch den Merkmalsidentifikator angezeigt wird, der Kernnetzknoten (IMS, DB) konfiguriert ist zum
Bereitstellen eines aktualisierten Merkmalsidentifikators, um den erweiterten Dienstleveldienst des Benutzerendgeräts (T1, T2, T3) anzuzeigen; und
Speichern von Informationen über den aktualisierten Merkmalsidentifikator des Benutzerendgeräts (T1, T2, T3).

9. Netzwerkknoten nach Anspruch 8, **dadurch gekennzeichnet, dass** er so konfiguriert ist, dass er die Bestimmung in Antwort darauf, dass sich das Benutzerendgerät an dem Netzknoten registrierte, und/oder in Antwort darauf, dass sich das Benutzerendgerät an einem Dienst registriert, ausführt.

10. Netzknoten nach Anspruch 8 oder 9, **dadurch gekennzeichnet, dass** er konfiguriert ist, zu prüfen, ob ein weiteres Benutzerendgerät, das zu dem Benutzer eines ersten Benutzerendgeräts gehört, in der Lage ist, den fortgeschritteneren Dienstleveldienst zu nutzen,
wobei, wenn das weitere Benutzerendgerät in der Lage ist, den fortgeschritteneren Dienstleveldienst zu verwenden, der Netzwerkknoten konfiguriert ist zum
Aktualisieren eines Merkmalsidentifikators, der sich auf eine Dienstkapazität des weiteren Benutzerendgeräts bezieht, um die fortgeschrittenere Dienstleveldienstkapazität des weiteren Benutzerendgeräts anzuzeigen, und
Speichern des aktualisierten Merkmalsidentifikators des weiteren Benutzerendgeräts.

11. Netzknoten nach Anspruch 8, 9 oder 10, **dadurch gekennzeichnet, dass** er konfiguriert ist zum
Empfangen, von einem zweiten Benutzerendgerät, einer Einladungsnachricht, die sich auf einen Kommunikationsdienst bezieht, wobei die Nachricht an das erste Benutzerendgerät gerichtet ist,
Vergleichen der von dem Kommunikationsdienst benötigten Dienstkapazitäten mit Informationen, die in dem Kernnetzknoten gespeichert sind und sich auf die Dienstkapazität des ersten Benutzerendgeräts beziehen, und
Weiterleiten der Einladungsnachricht an das erste Benutzerendgerät, wenn die Informationen anzeigen, dass das erste Benutzerendgerät den Kommunikationsdienst verwenden kann.

12. Netzknoten nach einem der Ansprüche 8 bis 11, **dadurch gekennzeichnet, dass** er so konfiguriert ist, dass er von dem ersten Benutzerendgerät Informationen über einen aktualisierten Merkmalsidentifikator des ersten Benutzerendgeräts empfängt.

13. Endgerät (T1, T2, T3) für ein Kommunikationssystem (S), wobei das Benutzerendgerät (T1, T2, T3) in der Lage ist, einen Merkmalsidentifikator bereitzustellen, der sich auf eine Dienstkapazität des Benutzerendgeräts (T1, T2, T3) bezieht,
**dadurch gekennzeichnet, dass** das Benutzerendgerät (T1, T2, T3) konfiguriert ist zum
Bestimmen, basierend auf den Merkmalsidentifikator, ob das Benutzerendgerät (T1, T2, T3) in der Lage ist oder nicht, einen fortgeschritteneren Dienstleveldienst zu verwenden, als durch den Merkmalsidentifikator angezeigt wird;
wobei, wenn das Benutzerendgerät (T1, T2, T3) in der Lage ist, einen erweiterten Dienstleveldienst zu verwenden, als durch den Merkmalsidentifikator angezeigt wird, das Benutzerendgerät (T1, T2, T3) konfiguriert ist zum
Bereitstellen eines aktualisierten Merkmalsidentifikators, um die fortgeschrittenere Dienstleveldienstkapazität des Benutzerendgeräts (T1, T2, T3) anzuzeigen.

14. Benutzerendgerät nach Anspruch 13, **dadurch gekennzeichnet, dass** es konfiguriert, von einem Kernnetzknoten Informationen über den Merkmalsidentifikator des Benutzerendgeräts, die in dem Kernnetzknoten gespeichert sind, abzurufen.

15. Benutzerendgerät nach Anspruch 13 oder 14, **dadurch gekennzeichnet, dass** es konfiguriert ist, Informationen über den aktualisierten Merkmalsidentifikator des Benutzerendgeräts an einen Kernnetzknoten zu übermitteln.

## Revendications

1. Procédé de fourniture d'un service de capacité à un terminal d'utilisateur (T1, T2, T3) dans un système de communication (S), le procédé comprenant la fourniture d'un identifiant de fonctionnalité lié à une capacité de service du terminal d'utilisateur (T1, T2, T3)
**caractérisé par** le procédé comprenant les étapes consistant à
déterminer, sur la base de l'identifiant de fonctionnalité, si un premier terminal d'utilisateur (T1, T2, T3) est capable ou non d'utiliser un service de niveau de service plus avancé que celui indiqué par l'identifiant de fonctionnalité ;
dans lequel si le premier terminal d'utilisateur (T1, T2, T3) est capable d'utiliser un service de niveau de service plus avancé que celui indiqué par l'identifiant de fonctionnalité, le procédé comprend les étapes consistant à
fournir un identifiant de fonctionnalité mis à jour afin d'indiquer la capacité de service de niveau de service plus avancé du premier terminal d'utilisateur (T1, T2, T3); et
stocker, dans un noeud de réseau central (IMS, DB), des informations sur l'identifiant de fonctionnalité mis à jour du premier terminal d'utilisateur.

2. Procédé selon la revendication 1, **caractérisé en ce que** la détermination est effectuée en réponse au terminal d'utilisateur s'inscrivant à un noeud de réseau et/ou en réponse au terminal d'utilisateur s'inscrivant à un service.

3. Procédé selon la revendication 1 ou 2, **caractérisé en ce qu'**il est vérifié si un terminal d'utilisateur supplémentaire appartenant à l'utilisateur du premier terminal d'utilisateur est capable d'utiliser le service de niveau de service plus avancé,
dans lequel si terminal d'utilisateur est capable d'utiliser le service de niveau de service plus avancé, le procédé comprend les étapes consistant à
mettre à jour un identifiant de fonctionnalité lié à une capacité de service du terminal d'utilisateur supplémentaire afin d'indiquer la capacité de service de niveau de service plus avancé du terminal d'utilisateur supplémentaire, et stocker, dans le noeud de réseau central (IMS, DB), des informations sur l'identifiant de fonctionnalité mis à jour du terminal d'utilisateur supplémentaire.

4. Procédé selon la revendication 1, 2 ou 3, **caractérisé en ce que** l'identifiant de fonctionnalité comprend une étiquette de fonctionnalité, l'agent utilisateur, et/ou une en-tête de message SIP associée.

5. Procédé selon l'une quelconque des revendications 1 à 4, **caractérisé par** les étapes consistant à
recevoir, d'un second terminal d'utilisateur, un message d'invitation relatif à un service de communication, dans lequel le message est dirigé vers le premier terminal d'utilisateur,
comparer les capacités de service requises par le service de communication avec les informations stockées dans le noeud de réseau central et se rapportant à la capacité de service du premier terminal d'utilisateur,
dans lequel le message d'invitation est transmis au premier terminal d'utilisateur, si les informations indiquent que le premier terminal d'utilisateur est capable d'utiliser le service de communication.

6. Procédé selon l'une quelconque des revendications 1 à 5, **caractérisé par** le premier terminal d'utilisateur fournissant, à un noeud de réseau central, des informations sur un identifiant de fonctionnalité mis à jour du premier terminal d'utilisateur.

7. Système de communication (S), dans lequel le système (S) est configuré pour fournir un identifiant de fonctionnalité relatif à une capacité de service d'un terminal d'utilisateur (T1, T2, T3),
**caractérisé en ce que** le système (S) est configuré pour
déterminer, sur la base de l'identifiant de fonctionnalité, si oui le terminal d'utilisateur (T1, T2, T3) est capable ou non d'utiliser un service de niveau de service plus avancé que celui indiqué par l'identifiant de fonctionnalité ;
dans lequel si le terminal d'utilisateur (T1, T2, T3) est capable d'utiliser un service de niveau de service plus avancé que celui indiqué par l'identifiant de fonctionnalité, le système (S) est configuré pour
fournir un identifiant de fonctionnalité mis à jour afin d'indiquer la capacité de service de niveau de service plus avancé du terminal d'utilisateur (T1, T2, T3) ; et
stocker, dans un noeud de réseau central (IMS, DB), des informations sur l'identifiant de fonctionnalité mis à jour du terminal d'utilisateur.

8. Noeud de réseau central (IMS, DB) d'un système de communication (S) dans lequel le noeud de réseau central (IMS, DB) est configuré pour fournir un identifiant de fonctionnalité relatif à une capacité de service d'un terminal d'utilisateur (T1, T2, T3),
**caractérisé en ce que** le noeud de réseau central (IMS, DB) est configuré pour déterminer, sur la base de l'identifiant de fonctionnalité, si le terminal d'utilisateur (T1, T2, T3) est capable ou non d'utiliser un service de niveau de service plus avancé que celui indiqué par l'identifiant de fonctionnalité ;
dans lequel, si le terminal d'utilisateur (T1, T2, T3) est capable d'utiliser un service de niveau de service plus avancé que celui indiqué par l'identifiant de fonctionnalité, le noeud de réseau central (IMS, DB) est configuré pour
fournir un identifiant de fonctionnalité mis à jour afin d'indiquer la capacité de service de niveau de service plus avancé du terminal d'utilisateur (T1, T2, T3) ; et stocker des informations sur l'identifiant de fonctionnalité mis à jour du terminal d'utilisateur (T1, T2, T3).

9. Noeud de réseau selon la revendication 8, **caractérisé en ce qu'**il est configuré pour effectuer la détermination en réponse au terminal d'utilisateur s'inscrivant au noeud de réseau et/ou en réponse au terminal d'utilisateur s'inscrivant à un service.

10. Noeud de réseau selon la revendication 8 ou 9, **caractérisé en ce qu'**il est configuré pour vérifier si un terminal d'utilisateur supplémentaire appartenant à l'utilisateur d'un premier terminal d'utilisateur est capable d'utiliser le service de niveau de service plus avancé,
dans lequel si le terminal d'utilisateur est capable d'utiliser le service de niveau de service plus avancé, le noeud de réseau est configuré pour
mettre à jour un identifiant de fonctionnalité relatif à une capacité de service du terminal d'utilisateur supplémentaire afin d'indiquer la capacité de service de niveau de service plus avancé du terminal d'utilisateur supplémentaire, et
stocker l'identifiant de fonctionnalité mis à jour du terminal d'utilisateur supplémentaire.

11. Noeud de réseau selon la revendication 8, 9 ou 10, **caractérisé en ce qu'**il est configuré pour
recevoir, à partir d'un second terminal d'utilisateur, un message d'invitation relatif à un service de communication, dans lequel le message est dirigé vers le premier terminal d'utilisateur,
comparer les capacités de service requises par le service de communication avec des informations stockées dans le noeud de réseau central et se rapportant à la capacité de service du premier terminal d'utilisateur, et
transmettre le message d'invitation au premier terminal d'utilisateur, si les informations indiquent que le premier terminal d'utilisateur est capable d'utiliser le service de communication.

12. Noeud de réseau selon l'une quelconque des revendications 8 à 11, **caractérisé en ce qu'**il est configuré pour recevoir, à partir du premier terminal d'utilisateur, des informations sur un identifiant de fonctionnalité mis à jour du premier terminal d'utilisateur.

13. Terminal d'utilisateur (T1, T2, T3) pour un système de communication (S), dans lequel le terminal d'utilisateur (T1, T2, T3) est capable de fournir un identifiant de fonctionnalité relatif à une capacité de service du terminal d'utilisateur (T1, T2, T3),
**caractérisé en ce que** le terminal d'utilisateur (T1, T2, T3) est configuré pour déterminer, sur la base de l'identifiant de fonctionnalité, si le terminal d'utilisateur (T1, T2, T3) est capable ou non d'utiliser un service de niveau de service plus avancé que celui indiqué par l'identifiant de fonctionnalité ;
dans lequel si le terminal d'utilisateur (T1, T2, T3) est capable d'utiliser un service de niveau de service plus avancé que celui indiqué par l'identifiant de fonctionnalité, le terminal d'utilisateur (T1, T2, T3) est configuré pour
fournir un identifiant de fonctionnalité mis à jour afin d'indiquer la capacité de service de niveau de service plus avancé du terminal d'utilisateur (T1, T2, T3).

14. Terminal d'utilisateur selon la revendication 13, **caractérisé en ce qu'**il est configuré pour récupérer, à partir d'un noeud de réseau central, des informations sur l'identifiant de fonctionnalité du terminal d'utilisateur, stockée dans le noeud de réseau central.

15. Terminal d'utilisateur selon la revendication 13 ou 14, **caractérisé en ce qu'**il est configuré pour transmettre, à un noeud de réseau central, les informations sur l'identifiant de fonctionnalité mis à jour du terminal d'utilisateur.
